# EUROPÄISCHE PATENTSCHRIFT

(11) **EP 3 356 301 B1**
(45) Veröffentlichungstag und Bekanntmachung des Hinweises auf die Patenterteilung: **27.05.2020**
(21) Anmeldenummer: 16805740.4
(22) Anmeldetag: 22.11.2016
(51) Int. Cl.: C03B 35/06, C03B 35/26

(54) **VORRICHTUNG ZUM TRANSPORT VON GEGENSTÄNDEN, INSBESONDERE VON GLASARTIKELN**
DEVICE FOR TRANSPORTING OBJECTS, IN PARTICULAR GLASS ARTICLES
DISPOSITIF POUR LE TRANSPORT D'OBJETS, EN PARTICULIER D'OBJETS EN VERRE

(30) Priorität: 04.12.2015 DE 202015106620 U; 11.02.2016 DE 102016102410; 14.10.2016 DE 202016105758 U
(43) Veröffentlichungstag der Anmeldung: 08.08.2018
(73) Patentinhaber: Ernst Pennekamp GmbH & Co. OHG, 58256 Ennepetal (DE)
(72) Erfinder: HOFF, Klaus-Uwe, 42499 Hückeswagen (DE)
(74) Vertreter: Buse, Mentzel, Ludewig Patentanwaltskanzlei
(86) Internationale Anmeldenummer: PCT/EP2016/078430
(87) Internationale Veröffentlichungsnummer: WO 2017/093077

(56) Entgegenhaltungen:
- EP-A1- 0 479 516
- EP-A2- 0 960 863
- WO-A1-2014/044714
- DE-A1- 19 929 868
- DE-U1-202014 101 217
- GB-A- 530 088
- GB-A- 2 207 650
- US-A- 1 502 692
- US-A- 1 737 819
- US-A- 2 059 177
- US-A- 2 702 115
- US-A- 4 623 061
- US-B1- 6 446 788

## Beschreibung

Die Erfindung betrifft eine Vorrichtung gemäß Anspruch 1 zum präzisen Transport von Gegenständen, insbesondere von Glasartikeln. Unter präzisem Transport wird hierbei ein Transport verstanden, bei dem kleinere und/oder leichtere Gegenstände während des Transports nicht in ihrer Position verrutschen können. Derartige Vorrichtungen kommen insbesondere dann zum Einsatz, wenn die Waren eine kontinuierliche thermische Behandlung in einem Ofen erhalten. Gerade bei Glasartikeln mit geringem Durchmesser, z.B. bei kleinen Flaschen, Phiolen und Ähnlichem werden für die Ofendurchfahrt als Transportmittel Förderbänder verwendet, die häufig auch noch mit aus Blech geformten Trägerleisten versehen sind. Diese Förderbänder bzw. die Trägerleisten werden mittels eines Paares seitlicher Antriebsketten bewegt, welche einander gegenüberliegen.

Übliche Vorrichtungen sind in ihrer Breite begrenzt, da die Förderbänder zwischen dem Antriebskettenpaar mit zunehmender Breite durchhängen. Durch die thermische Ausdehnung bei den in einem Ofen vorherrschenden Temperaturen, die auch 750°C bis 780°C betragen können, wird dieser Effekt noch verstärkt. Auf dem Förderband befindliche Waren verlieren dann ihre Position und können am Ende des Ofens nicht mehr automatisiert abgenommen werden. Des Weiteren kann es auch zu Kollisionen zwischen benachbarten Waren bzw. zwischen einzelnen Waren und beispielsweise einer Trägerleiste kommen, wodurch Beschädigungen und Kratzer an den Waren, insbesondere bei Glaswaren vorkommen können. Dies ist insbesondere bei vergleichsweise leichten Glaswaren, wie Phiolen und Fläschchen, beispielsweise für die pharmazeutische Industrie, problematisch.

Außerdem neigen die Transportbänder und Trägerleisten mit ansteigender Breite dazu, Vibrationen und Schwingungen zu übertragen, was ebenfalls dazu führt, dass die Gegenstände ihre Position verlieren bzw. durch Zusammenstöße mit anderen Gegenständen, dem Transportband oder einer Trägerleiste Beschädigungen erfahren. Dies gilt es jedoch zu vermeiden.

Werden das Transportband bzw. die Trägerleisten versteift, um ein Durchhängen zu vermindern, hat dies indes den Nachteil, dass diese versteiften Bauteile ein höheres Volumen aufweisen, welches aufgeheizt werden muss, was wiederum mit einem erhöhten Energieeinsatz einher geht. Dies erhöht jedoch die Herstellungskosten für die Gegenstände und belastet darüber hinaus die Umwelt. Außerdem bewirkt eine steifere Konstruktion bei einer thermischen Beanspruchung, wie sie beispielsweise bei schnellen Temperaturwechseln hervorgerufen wird, eine erhöhte temporäre Verformung, was dazu führt, dass sich das Transportband bzw. die Trägerleisten nach oben oder unten durchbiegen können, so dass die bereits beschriebenen Kollisionen der Gegenstände mit anderen Gegenständen oder Bauteilen auftreten können.

Die DE 20 2005 008 427 U1 beschreibt eine Fördervorrichtung mit umlaufendem Förderorgan und Stützmitteln. Diese Fördervorrichtung dient im Wesentlichen der Beförderung von Schüttgütern, die mitunter ein recht hohes Gewicht haben können. Hier gilt es zu verhindern, dass längere Fördervorrichtungen, die die Schüttgüter über eine längere Distanz fördern, sich in Wellenform bewegen, war zu einer Schüttelbewegung des Schüttgutes führt. Hierfür wird eine gleitende Verbindung zwischen dem Förderorgan und der darunter befindlichen Stützleiste unter Zwischenschaltung einer Gleitlage realisiert. Nachteilig bei dieser Anordnung ist, dass sie für schwere Transportgüter ausgelegt ist, die viel höhere Kräfte benötigen, um in eine Schüttelbewegung gebracht zu werden. Außerdem sind die üblichen Gleitwerkstoffe oft nicht für höhere Temperaturbereiche ausgelegt, wie sie in Öfen für die Glasindustrie verwendet werden. Bei höheren Temperaturen laufen die Gleitbewegungen dann häufig nicht mehr "glatt", so dass es hier zu Vibrationen und Schwingungen kommen kann.

In der DE 695 15 983 T2 wird ein kettenbetriebener Bandförderer beschrieben. Mittig unterhalb des Bandes sitzt eine Abstützeinrichtung in Form einer Rollenkettenanordnung. Diese Vorrichtung ist ebenfalls nicht dazu gedacht, Vibrationen des Bandes zu minimieren oder in Bereichen mit erhöhter Temperatur eingesetzt zu werden.

Die WO2014/044714 A1 beschreibt einen Transportband, welches Glaswaren durch einen Ofen transportieren kann. Eine für diesen Temperaturbereich ausgelegte Mittenunterstützung ist hier nicht vorgesehen.

Schließlich beschreibt die DE 35 39 582 A1 noch eine Vorrichtung zur kontinuierlichen Fertigung von Betonteilen. Diese Vorrichtung umfasst eine Transporteinrichtung, auf der die Betonteile gegossen werden und auf der sie aushärten können. Als Antriebsmittel dienen hier Schleppketten, die über Antriebsaggregate angetrieben werden, die ihrerseits über Antriebswellen und Stirnzahnräder verfügen. Diese Vorrichtung ist ebenfalls für größere Lasten vorgesehen und dient nicht dazu möglichst vibrations- und schwingungsarm kleine Gegenstände präzise zu transportieren. Auch ist ein Einsatz in höheren Temperaturbereichen nicht vorgesehen.

Aufgabe der Erfindung ist es daher, eine Vorrichtung zu schaffen, die die vorerwähnten Nachteile vermeidet und auch bei größeren Baubreiten ein Durchhängen, Vibrieren oder Schwingen des Transportbandes bzw. der Trägerleisten verhindert. Diese Aufgabe wird durch die kennzeichnenden Merkmale des Anspruches 1 gelöst, denen folgende besondere Bedeutung zukommt.

Das Transportband weist wenigstens eine Mittenunterstützung auf, welche das Transportband von unten gegen den Boden der Vorrichtung abstützt. Hierbei weist die Mittenunterstützung eine rollende Verbindung zwischen dem Transportband und dem Boden der Vorrichtung auf. Hierdurch ergeben sich besonders wenig Reibungsverluste und das Transportband mit den Gegenständen kann gerade und problemlos unterstützt werden, um ein Durchhängen des Transportbandes bzw. der Trägerleisten und ein Vibrieren zu verhindern. Dabei verhindert die Mittenunterstützung Schwingungen und/oder Vibrationen, die durch die Bewegung des Transportbandes entstehen können. Ist beispielsweise eine Mittenunterstützung vorgesehen, welche mittig zwischen den beiden Antriebsketten unterhalb des Transportbandes angeordnet ist, halbiert sich die freitragende Länge des Transportbandes und der eventuell vorhandenen Trägerleisten. Hiermit wird die Durchbiegung drastisch gesenkt, da die Breite des Transportbandes bei der Berechnung der Durchbiegung mit der dritten Potenz zu Buche schlägt. Somit beträgt bei einer mittig angeordneten Mittenunterstützung die Durchbiegung des Transportbandes nur noch ein Achtel. Hierdurch ist es möglich, deutlich breitere Transportbänder vorzusehen, was den Durchsatz an Gegenständen durch eine Ofenanlage deutlich erhöht.

Bevorzugterweise sind Trägerleisten zur Aufnahme der Gegenstände vorgesehen, wobei die Mittenunterstützung dann am Transportband direkt und/oder auch direkt an den Trägerleisten angeordnet werden kann. Das Transportband selbst kann auch aus Trägerleisten aufgebaut sein, in welche die einzelnen Gegenstände aufgenommen werden. Die genaue Anordnung der Mittenunterstützung ist vom jeweiligen Anwendungsfall abhängig.

In einem bevorzugten Ausführungsbeispiel sind mehrere Rollenelemente direkt am Transportbad und/oder an den Trägerleisten angeordnet, wobei am Boden der Vorrichtung eine Fahrbahn für diese Rollenelemente vorgesehen ist. Somit fährt bzw. rollt das Transportband und wird durch die Rollenelemente als Mittenunterstützung nach unten hin abgestützt.

Selbstverständlich ist auch die kinematische Umkehr denkbar, wobei mehrere Rollenelemente am Boden der Vorrichtung unterhalb des Transportbandes angeordnet sind und am Transportband und/oder den Trägerleisten eine entsprechende Fahrbahn für diese Rollenelemente vorgesehen ist. Diese Fahrbahn am Transportband bzw. den Trägerleisten fährt dann die fest installierten Rollenelemente ab, wodurch sich die gewünschte Mittenunterstützung ergibt.

Eine weitere bevorzugte Möglichkeit der Erfindung ergibt sich, wenn die Mittenunterstützung mit dem Transportband bzw. den Trägerleisten mitfährt und dabei selbst angetrieben wird. Bei dieser Ausführungsform ist es wichtig, dass das Transportband bzw. die Trägerleisten mit genau der gleichen Geschwindigkeit bewegt werden, wie die Antriebsketten, welche das Transportband antreiben. Als Antriebsmittel der Mittenunterstützung können dann eine oder mehrere Mittenketten dienen, auf denen das Transportband und/oder die Trägerleisten aufliegen. Diese Mittenketten können dann bevorzugterweise synchron zu den Antriebsketten laufen, welche das Transportband antreiben. Auch für die Mittenketten kann am Boden der Vorrichtung eine Fahrbahn vorgesehen sein.

Die Mittenketten bzw. ist die Mittenkette können einstückig mit dem Transportband ausgebildet sein. Somit werden die Mittenketten und das Transportband immer gleichzeitig und mit gleicher Geschwindigkeit bewegt.

In einem bevorzugten Ausführungsbeispiel werden zwei Mittenketten als Mittenunterstützung am Transportband vorgesehen. Diese können dann miteinander verbunden sein oder auch nicht. Hierbei ist es vorteilhaft, wenn die Mittenketten mit dem Transportband einstückig ausgebildet sind.

Sind die beiden Mittenketten nicht miteinander verbunden, so kann auch das Transportband in der Mitte unterteilt sein und zwar über seine Breite. So erhält man quasi zwei nebeneinander angeordnete und parallel zueinander laufende Transportbandabschnitte, die jedoch die zu befördernden Waren genauso aufnehmen, wie ein einstückiges breites Transportband. Die Transportbandabschnitte können dann wieder mit den jeweiligen Mittenketten einstückig ausgebildet sein. Hier können die Mittenketten auch angetrieben sein bzw. als Antriebsketten ausgeführt sein.

In einem Ausführungsbeispiel sind die Achsmittelpunkte der Mittenketten fluchtend zu den Achsmittelpunkten der Antriebsketten des Transportbandes angeordnet. Somit ist das Transportband gerade zwischen diesen Ketten ausgerichtet.

In einem besonders bevorzugten Ausführungsbeispiel kann die Mittenunterstützung eine oder mehrere Auflagen umfassen, auf denen das Transportband und/oder die Trägerleisten aufliegen. Dann ist ein besonders ruhiger und vibrationsfreier Lauf des Transportbandes möglich. Die Schwingungen im Transportband können noch weiter reduziert werden, wenn Auflagen verwendet werden, die formschlüssig mit den Trägerleisten verbunden sind. Diese können dann über eine Mittenkette oder über Rollen mit der Mittenunterstützung zusammenwirken.

Die Auflagen können auch jeweils mit einer Aufnahme zusammen wirken. Hierzu existiert für jede Trägerleiste eine solche Aufnahme. Diese Aufnahme bildet dann jeweils eine formschlüssige Verbindung zur Trägerleiste und ist mit der bereits bekannten Auflage verbunden. Hierdurch wird eine besonders ebene Fahrbahn realisiert, so dass besonders wenig Vibrationen und Schwingungen auf das Transportband und somit auf die Gegenstände übertragen werden. Das Transportband läuft so sehr ruhig.

Eine weitere bevorzugte Ausführungsform sieht Mitnehmer an der Mittenkette oder einem anderen Element vor. Dabei ist für jede Trägerleiste ein Mitnehmer vorgesehen.

Bei dem Einsatz von Trägerleisten kommen häufig durch Abkanten erzeugte Blechprofile zum Einsatz, die zwecks optimalen Wärmeübertrages oft über eine Lochstruktur verfügen. Nachteilig dabei ist, dass die Lochstruktur den Wärmefluss innerhalb der Trägerleisten behindert, was insbesondere bei Temperaturwechseln zu einem Verbiegen der Trägerleisten in vertikaler und horizontaler Richtung führt.

Das Verbiegen der Trägerleisten führt somit in horizontaler und vertikaler Richtung zu einer bogenförmigen Ausrichtung der Trägerleisten. Der Bogen entspricht dabei in horizontaler als auch vertikaler Ausrichtung der Biegelinie eines an beiden Enden gelagerten Balkens mit der max. Auslenkung in der Balkenmitte. Art der Ausrichtung, ob konvex oder konkav, ist abhängig von der gewählten Profilausführung und der Art des Temperaturwechsels (Kalt-Warm bzw. Warm-Kalt).

Für die auf der Trägerleiste platzierten Gegenstände bedeutet dies, in Abhängigkeit der Höhe der Durchbiegung an der betreffenden Position, eine Lageabweichung in horizontaler und vertikaler Richtung im Vergleich zu einer Platzierung ohne die thermische Verbiegung. Ein präziser Transport der Gegenstände ist so nicht mehr gegeben.

Die bevorzugte Ausführungsform ist so ausgeführt, dass die speziell geformten Mitnehmer auf einem oder mehreren, umlaufenden Transportsystem, wie der Mittenkette, montiert sind. Dieses Transportsystem wird angetrieben und muss synchron den Antriebsketten des Transportbades betrieben werden. Um ein synchrones Laufen der Mittenketten und der Antriebsketten zu gewährleisten, ist es denkbar, dass zwei getrennte Antriebssysteme jeweils für den Antrieb der Antriebsketten und für den Antrieb der Mittenketten verwendet werden, die entweder mechanisch oder elektronisch gekoppelt sind. Weiterhin ist es denkbar, dass bereits vorhandene Antriebssystem der Antriebsketten auch zum Antrieb der Mittenketten zu verwenden.

Die umlaufende Mittenkette mit den speziell geformten Mitnehmern ist mittig zum Transportband platziert - dort wo die größte Auslenkung der Biegelinie an der Trägerleiste auftritt.

Weitere Ausführungsformen und Vorteile der Erfindung ergeben sich aus der nachfolgenden Beschreibung, den Unteransprüchen sowie den Zeichnungen. In den Zeichnungen ist die Erfindung in sechs Ausführungsbeispielen dargestellt. Es zeigen:
- Fig. 1:: eine erste Ausführungsform einer erfindungsgemäßen Vorrichtung in Vorderansicht,
- Fig. 2:: die Vorrichtung aus Fig. 1 in Seitenansicht,
- Fig. 3:: eine zweite Ausführungsform einer erfindungsgemäßen Vorrichtung in Vorderansicht,
- Fig. 4:: die Vorrichtung aus Fig. 3 in Seitenansicht,
- Fig. 5:: eine dritte Ausführungsform einer erfindungsgemäßen Vorrichtung in Vorderansicht,
- Fig. 6:: die Vorrichtung aus Fig. 5 in Seitenansicht,
- Fig. 7:: eine vierte Ausführungsform einer erfindungsgemäßen Vorrichtung in Vorderansicht,
- Fig. 8:: die Vorrichtung aus Fig. 7 in Seitenansicht,
- Fig. 9:: eine fünfte Ausführungsform der erfindungsgemäßen Vorrichtung in Vorderansicht,
- Fig. 10:: die Vorrichtung gemäß Fig. 9 in Seitenansicht,
- Fig. 11:: eine sechste Ausführungsform der erfindungsgemäßen Vorrichtung in Vorderansicht,
- Fig. 12:: die Vorrichtung aus Fig. 11 in Seitenansicht,
- Fig. 13:: die Vorrichtung aus Fig. 11 und Fig. 12 in Draufsicht.

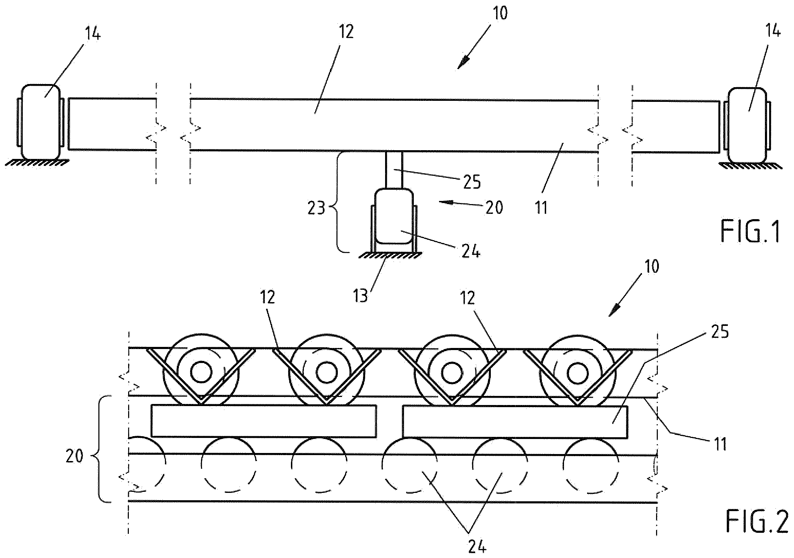

In den Fig. 1 und 2 ist ein erstes Ausführungsbeispiel einer erfindungsgemäßen Vorrichtung 10 gezeigt. Man erkennt das Transportband 11 sowie die Trägerleisten 12, welche hier als winklige Prismen ausgebildet sind, in welche die Gegenstände einbringbar sind. Das Transportband 11 und die Trägerleisten 12 werden von einem Paar von Antriebsketten 14 angetrieben. In der Mitte des Transportbandes 11 ist eine Mittenunterstützung 20 vorgesehen, welche hier eine rollende Verbindung 23 aufweist. Hierzu ist am Boden 13 der Vorrichtung 10 eine Vielzahl von Rollenelementen 24 angeordnet. An den Trägerleisten 12 sind Elemente befestigt, welche eine Fahrbahn 25 für die Vielzahl von Rollenelementen 24 bilden. Hierdurch kann das Transportband 11 mit den Trägerleisten 12 mit Hilfe der Mittenunterstützung 20 voran bewegt werden und zwar auf eine ruhige und schwingungsarme Weise, indem die Fahrbahn 25 die Vielzahl von Rollenelementen 24 abfährt. Ein Durchhängen des Transportbandes 11 wird durch die Mittenunterstützung 20 verhindert.

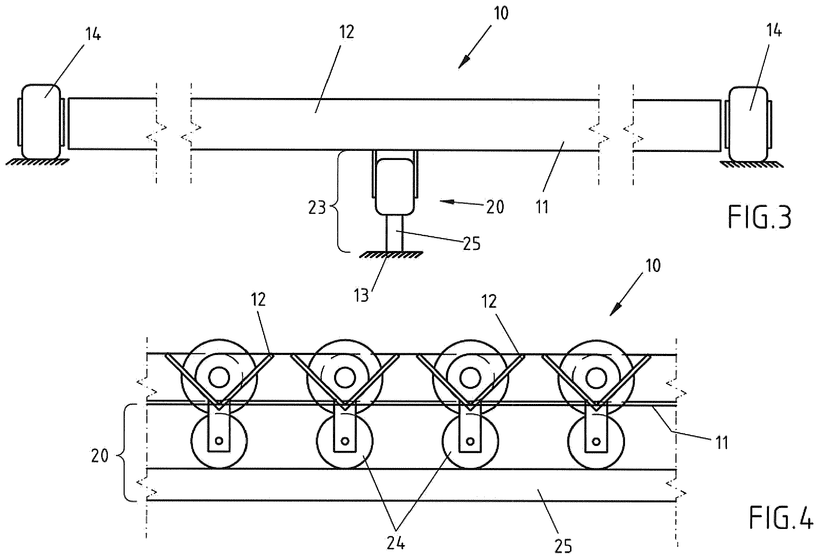

Eine zweite Ausführungsform der erfindungsgemäßen Vorrichtung 10 zeigen die Fig. 3 und 4. Auch hier ist das Transportband 11 wieder mit Trägerleisten 12 versehen und wird durch ein Paar von Antriebsketten 14 angetrieben. Auch die Mittenunterstützung 20 ist wieder mit einer rollenden Verbindung 23 versehen. Allerdings verfügen hier die Trägerleisten 12 über eine Vielzahl von Rollenelementen 24, während am Boden 13 der Vorrichtung 10 eine Fahrbahn 25 vorgesehen ist, auf welcher die Rollenelemente 24 abrollen und dadurch die Mittenunterstützung 20 bilden. Auch bei dieser Ausführungsform ist wieder eine möglichst schwingungsarme Unterstützung des Transportbandes 11 mit den Trägerleisten 12 durch die Mittenunterstützung 20 realisiert.

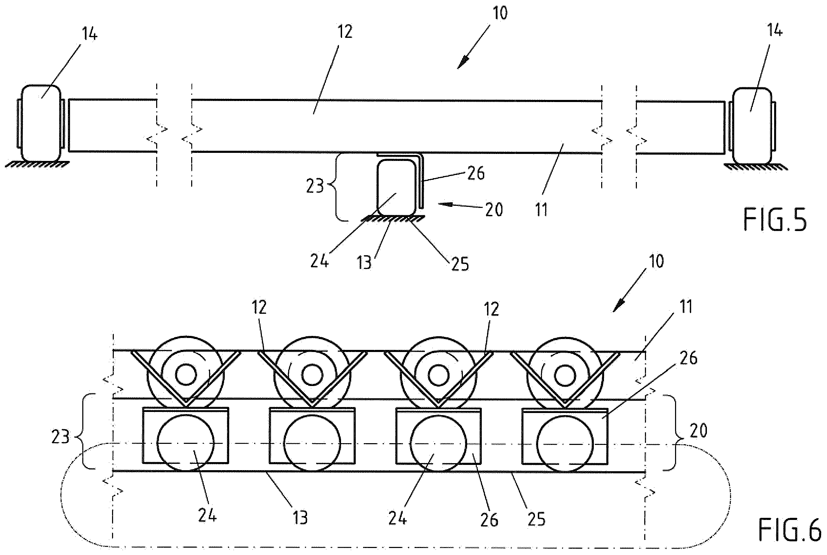

Auch das dritte Ausführungsbeispiel aus den Fig. 5 und 6 zeigt eine rollende Verbindung 23 im Bereich der Mittenunterstützung 20 der Vorrichtung 10. Das Transportband 11, die Trägerleisten 12 und die Antriebsketten 14 sind hier wieder genauso ausgestaltet wie in den bisherigen Ausführungsformen. Bei dieser Vorrichtung 10 sind am Boden 13 eine Vielzahl von Rollenelementen 24 vorgesehen. Jedes der Rollenelemente 24 verfügt über eine Auflage 26. Die Trägerleisten 12 liegen dabei auf diesen Auflagen 26 auf.

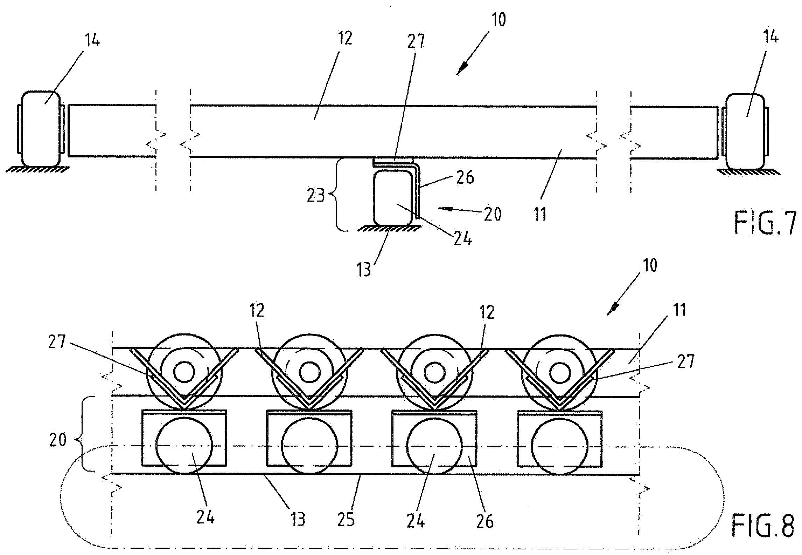

Eine Weiterentwicklung der letzten Ausführungsform zeigen die Fig. 7 und 8. Hier existiert für jede Trägerleiste 12 eine Aufnahme 27. Diese Aufnahme 27 bildet dann jeweils eine formschlüssige Verbindung zur Trägerleiste 12 und ist mit der bereits bekannten Auflage 26 verbunden. Hierdurch wird eine besonders ebene Fahrbahn 25 realisiert, so dass besonders wenig Schwingungen und Bewegungen auf das Transportband 11 und somit auf die Gegenstände übertragen werden. Das Transportband 11 läuft so sehr ruhig.

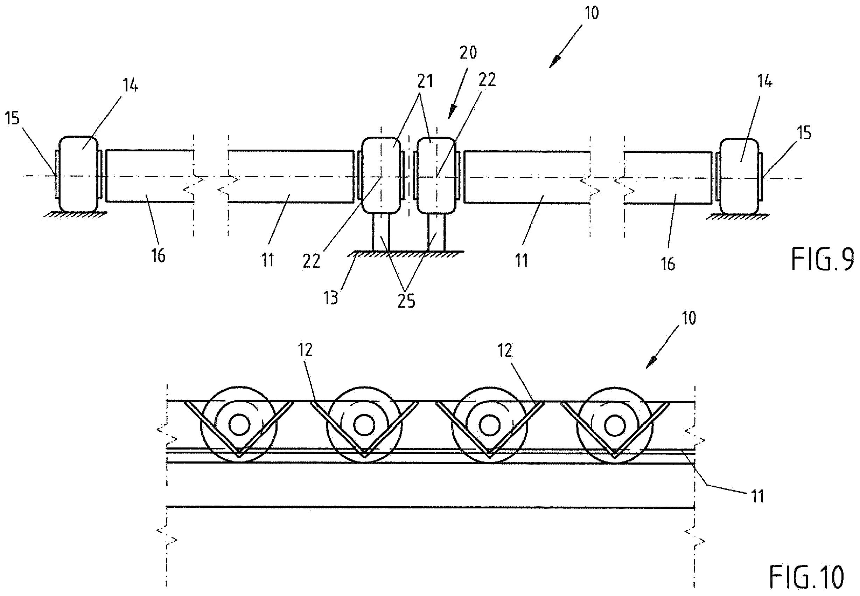

In den Fig. 9 und 10 ist ein weiteres Ausführungsbeispiel einer erfindungsgemäßen Vorrichtung 10 gezeigt. Man erkennt, dass in dieser Ausführungsform das Transportband 11 wieder aus Trägerleisten 12 besteht, welche hier als winklige Prismen ausgebildet sind, in welche die Gegenstände einbringbar sind. Das aus den Trägerleisten 12 bestehende Transportband 11 wird von einem Paar von Antriebsketten 14 angetrieben. In der Mitte des Transportbandes 11 ist eine Mittenunterstützung 20 vorgesehen, welche hier zwei Mittenketten 21 aufweist. Diese bewegen sich auf zwei am Boden 13 der Vorrichtung 10 angebrachte Fahrbahnen 25, wodurch die Mittenunterstützung 20 gebildet wird. Bei dieser Ausführungsform ist eine möglichst schwingungsarme Unterstützung des Transportbandes 11 durch die Mittenunterstützung 20 realisiert. Diese Vorrichtung 10 ist auch einfach zu montieren. Da die Mittenkitten 21 nicht miteinander verbunden sind, wird hier das Transportband 11 in zwei Transportbandabschnitte 16 unterteilt. Die Achsmittelpunkte 15 der Antriebsketten14 fluchten mit den Achsmittelpunkten 22 der Mittenketten 21.

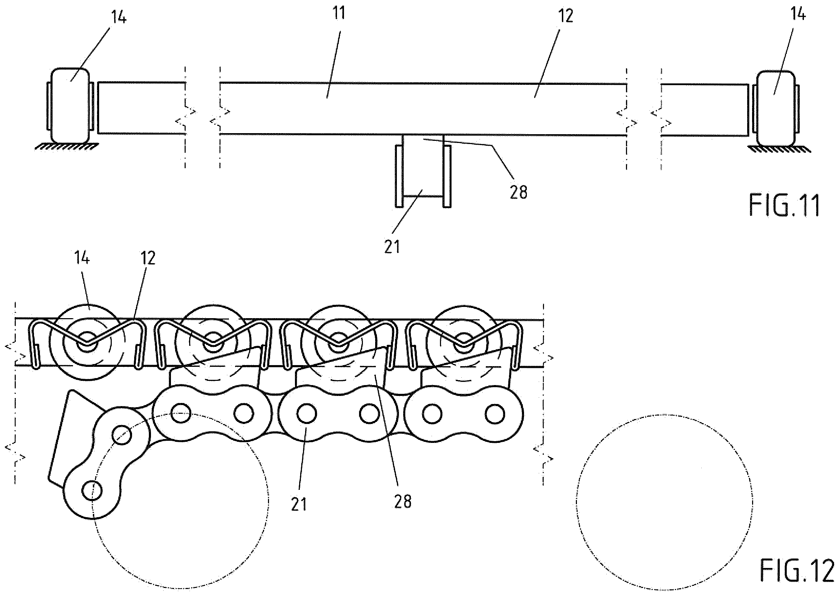

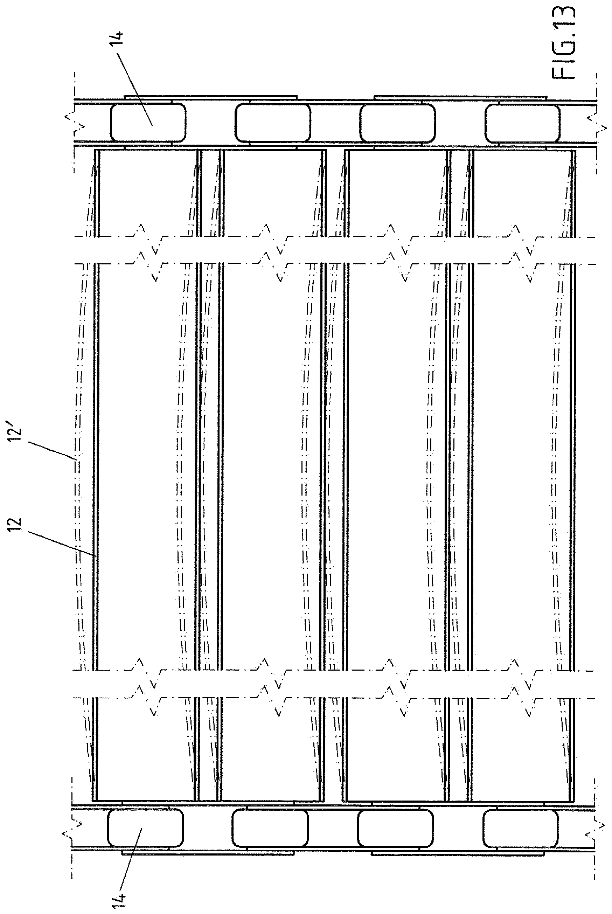

Ein letztes bevorzugtes Ausführungsbeispiel ist in den Fig. 11 bis 13 dargestellt. Wie insbesondere aus Fig. 13 ersichtlich ist haben sich hier die Trägerleisten 12 durch thermische Belastung verformt und sind als verbogene Trägerleisten 12' ausgebildet. Sie weisen hier in horizontaler Richtung eine Auslenkung entgegen der durch einen Pfeil dargestellten Transportrichtung und in vertikaler Richtung eine Auslenkung nach unten auf. Die aus Fig. 12 gut zu erkennenden Mitnehmer 28 bewirken bei dieser Ausführungsform ein Zurückbiegen der verbogenen Trägerleiste 12' in den Ausgangszustand der Trägerleiste 12. Dies ist in Fig. 13 schematisch dargestellt. Die Form des Mitnehmers 28, die Form der Trägerleiste 12 und der gewählte Eingriffspunkt sind so auf einander abgestimmt, dass für jeden Anwendungsfall die gewünschte Zurückbiegung erzielt wird.

In Fig. 12 erkennt man hier auch, dass die Mittenkette 21 mit den Mitnehmern 28 auf einer umlaufenden Anordnung angetrieben wird. Dies ist auch auf andere angetriebene Mittenketten 21 übertragbar und hier nur schematisch dargestellt.

Abschließend sei noch darauf hingewiesen, dass die hier gezeigten Ausführungsformen lediglich beispielhafte Verwirklichungen der Erfindung sind. Diese ist nicht darauf beschränkt. Somit können die Rollenelemente und die Trägerleisten auch anders ausgestaltet und/oder angeordnet sein. Die beschrieben Vorrichtung ist normalerweise für Temperaturen von maximal 750 °C bis 780 °C vorgesehen. Sie kann jedoch auch in anderen Temperaturbereichen eingesetzt werden. Es ist auch möglich, über die Breite des Transportbandes bzw. der Trägerleisten mehr als eine Mittenunterstützung vorzusehen, wobei verschiedene Mittenunterstützungen an einem Transportband nicht identisch zueinander sein müssen.

### Bezugszeichenliste:

- 10: Vorrichtung
- 11: Transportband
- 12: Trägerleiste
- 12': Verbogene Trägerleiste
- 13: Boden von 10
- 14: Antriebskette
- 15: Achsmittelpunkt von 14
- 16: Transportbandabschnitt
- 20: Mittenunterstützung
- 21: Mittenkette
- 22: Achsmittelpunkt von 21
- 23: Rollende Verbindung
- 24: Rollenelement
- 25: Fahrbahn
- 26: Auflage
- 27: Aufnahme
- 28: Mitnehmer

## Patentansprüche

1. Vorrichtung (10) zum präzisen Transport von kleinen und leichten Gegenständen, insbesondere von Glasartikeln, in beheizten Räumen, wie Ofenräumen,
wobei die Vorrichtung (10) auch für Temperaturen von 750°C bis 780°C ausgelegt ist,
mit einem Transportband (11), auf welchem die Gegenstände definiert positioniert anordbar sind,
wobei das Transportband (11) durch seitlich angeordnete Antriebsketten (14) angetrieben wird und auf diesen freitragend angeordnet ist,
**dadurch gekennzeichnet,**
**dass** das Transportband (11) wenigstens eine Mittenunterstützung (20) aufweist, welche das Transportband (11) von unten gegen den Boden (13) der Vorrichtung (10) abstützt und dadurch das Durchhängen des Transportbandes (11) vermindert
**dass** die Mittenunterstützung (20) als rollende Verbindung (23) zwischen dem Transportband (11) und dem Boden (13) der Vorrichtung (10) ausgebildet ist
und wobei die Mittenunterstützung (20) dadurch Schwingungen und/oder Vibrationen, die durch die Bewegung des Transportbandes (11) entstehen könnten, abfängt bzw. verhindert.

2. Vorrichtung (10) nach Anspruch 1, **dadurch gekennzeichnet, dass** das Transportband (11) Trägerleisten (12) zur Aufnahme der Gegenstände aufweist und/oder dass das Transportband (11) aus Trägerleisten (12) besteht, wobei die Mittenunterstützung (20) am Transportband (11) direkt und/oder an der bzw. den Trägerleisten (12) anordbar ist.

3. Vorrichtung (10) nach einem der Ansprüche 1 oder 2, **dadurch gekennzeichnet, dass** das Transportband (11) und/oder die Trägerleisten (12) so ausgestaltet sind, dass sie ein möglichst geringes Volumen aufweisen, um den Energieeinsatz so gering wie möglich zu halten.

4. Vorrichtung (10) nach einem der Ansprüche 1 bis 3, **dadurch gekennzeichnet, dass** mehrere Rollenelemente (24) an dem Transportband (11) und/oder den Trägerleisten (12) angeordnet sind und am Boden (13) der Vorrichtung (10) eine Fahrbahn (25) für die Rollenelemente (24) vorgesehen ist.

5. Vorrichtung (10) nach einem der Ansprüche 1 bis 3, **dadurch gekennzeichnet, dass** mehrere Rollenelemente (24) am Boden (13) der Vorrichtung (10) unterhalb des Transportbandes (11) angeordnet sind und am Transportband (11) und/oder an den Trägerleisten (12) eine Fahrbahn (25) für die Rollenelemente (24) vorgesehen ist.

6. Vorrichtung (10) nach einem der Ansprüche 1 bis 5, **dadurch gekennzeichnet, dass** die Mittenunterstützung (20) mit dem Transportband (11) und/oder den Trägerleisten (12) mit fährt und angetrieben ist.

7. Vorrichtung (10) nach einem der Ansprüche 1 bis 6, **dadurch gekennzeichnet, dass** Auflagen (26) vorgesehen sind, auf denen das Transportband (11) und/oder die Trägerleisten (12) aufliegen oder die formschlüssig mit dem Transportband (11) und/oder den Trägerleisten (12) verbindbar sind.

8. Vorrichtung (10) nach Anspruch 7, **dadurch gekennzeichnet, dass** für jede Trägerleiste (12) eine Aufnahme (27) existiert, wobei die jeweilige Aufnahme (27) eine formschlüssige Verbindung zur Trägerleiste (12) bildet und mit der Auflage (26) verbunden ist.

9. Vorrichtung (10) nach Anspruch 2, **dadurch gekennzeichnet, dass** die Mittenunterstützung (20) aus einer oder mehreren Mittenketten (21) besteht und dass die Mittenkette (21) Mitnehmer (28) aufweist, die in die Trägerleisten (12) eingreifen und diese, wenn sie mit einer durch thermische Belastung verformten Trägerleiste (12') in Wirkverbindung treten, gerade biegen, um die ursprüngliche Form der Trägerleiste (12) wieder herzustellen.

## Claims

1. Device (10) for the precise transport of small and light objects, especially glass articles, in heated rooms, such as furnace rooms,
wherein the device (10) is also designed for temperatures from 750°C to 780°C,
with a conveyor belt (11) on which the objects can be arranged in a defined position,
wherein the conveyor belt (11) is driven by laterally arranged drive chains (14) and is arranged cantilevered thereon,
**characterised in that**
the conveyor belt (11) has at least one central support (20) which supports the conveyor belt (11) from below against the bottom (13) of the device (10) and thereby reduces sagging of the conveyor belt (11)
the central support (20) is designed as a rolling connection (23) between the conveyor belt (11) and the bottom (13) of the device (10)
and wherein the central support (20) thereby intercepts or prevents oscillations and/or vibrations which could be caused by the movement of the conveyor belt (11).

2. Device (10) according to claim 1, **characterised in that** the conveyor belt (11) has carrier strips (12) for receiving the objects and/or that the conveyor belt (11) consists of carrier strips (12), wherein the central support (20) can be arranged on the conveyor belt (11) directly and/or on the carrier strip or strips (12).

3. Device (10) according to one of claims 1 or 2, **characterised in that** the conveyor belt (11) and/or the carrier strips (12) are designed to have the smallest possible volume in order to keep the energy input as low as possible.

4. Device (10) according to one of claims 1 to 3, **characterised in that** a plurality of roller elements (24) are arranged on the conveyor belt (11) and/or the carrier strips (12) and a track (25) for the roller elements (24) is provided on the floor (13) of the device (10).

5. Device (10) according to one of claims 1 to 3, **characterised in that** a plurality of roller elements (24) are arranged on the bottom (13) of the device (10) below the conveyor belt (11) and a track (25) for the roller elements (24) is provided on the conveyor belt (11) and/or on the carrier strips (12).

6. Device (10) according to one of claims 1 to 5, **characterised in that** the central support (20) travels along and is driven by the conveyor belt (11) and/or the carrier strips (12).

7. Device (10) according to one of claims 1 to 6, **characterised in that** supports (26) are provided on which the conveyor belt (11) and/or the carrier strips (12) rest or which can be positively connected to the conveyor belt (11) and/or the carrier strips (12).

8. Device (10) according to claim 7, **characterised in that** a receptacle (27) exists for each carrier strip (12), the respective receptacle (27) forming a positive connection to the carrier strip (12) and being connected to the support (26).

9. Device (10) according to claim 2, **characterised in that** the central support (20) consists of one or more central chains (21) and that the central chain (21) has drivers (28) which engage in the carrier strips (12) and, when they come into operative connection with a carrier strip (12') deformed by thermal load, straighten it in order to restore the original shape of the carrier strip (12).

## Revendications

1. Dispositif pour le transport (10) précis d'objets de petite taille et légers, en particulier d'objets en verre, dans des volumes chauffés tels que des chambres de four,
sachant que le dispositif (10) est conçu aussi pour des températures comprises entre 750 °C et 780 °C,
avec un tapis transporteur (11) sur lequel les objets peuvent être disposés sur des positions définies,
sachant que le tapis transporteur (11) est entraîné par des chaînes (14) disposées latéralement et qu'il est disposé autoporteur sur ces chaînes,
**caractérisé en ce que**
le tapis transporteur (11) présente au moins un soutènement médian (20) qui soutient le tapis transporteur (11) par le bas contre le fond (13) du dispositif (10) et diminue ainsi la concavité du tapis transporteur (11),
le soutènement médian (20) est configuré comme jonction roulante (23) entre le tapis transporteur (11) et le fond (13) du dispositif (10)
et sachant que le soutènement médian (20) intercepte et/ou empêche de la sorte des oscillations et/ou vibrations susceptibles d'être engendrées par le mouvement du tapis transporteur (11).

2. Dispositif (10) selon la revendication 1, **caractérisé en ce que** le tapis transporteur (11) présente des bandeaux porteurs (12) destinés à recevoir les objets et/ou que le tapis transporteur (11) se compose de bandeaux porteurs (12), sachant que le soutènement médian (20) au niveau du tapis transporteur (11) peut être disposé directement et/ou contre le ou les bandeaux porteurs (12).

3. Dispositif (10) selon l'une des revendications 1 ou 2, **caractérisé en ce que** le tapis transporteur (11) et/ou les bandeaux porteurs (12) sont configurés de telle sorte qu'ils présentent un volume le plus faible possible pour maintenir la mise en œuvre d'énergie la plus faible possible.

4. Dispositif (10) selon l'une des revendications 1 à 3, **caractérisé en ce que** plusieurs roulettes (24) sont disposées contre le tapis transporteur (11) et/ou contre les bandeaux porteurs (12) et que contre le fond (13) du dispositif (10) est prévue une piste (25) où roulent les roulettes (24).

5. Dispositif (10) selon l'une des revendications 1 à 3, **caractérisé en ce que** plusieurs roulettes (24) sont disposées contre le fond (13) du dispositif (10) en dessous du tapis transporteur (11) et que contre le tapis transporteur (11) et/ou contre les bandeaux supports (12) est prévue une piste (25) où roulent les roulettes (24).

6. Dispositif (10) selon l'une des revendications 1 à 5, **caractérisé en ce que** le soutènement médian (20) se déplace avec le tapis transporteur (11) et/ou les bandeaux porteurs (12) et est entraîné.

7. Dispositif (10) selon l'une des revendications 1 à 6, **caractérisé en ce que** sont prévues des garnitures (26) sur lesquelles reposent le tapis transporteur (11) et/ou les bandeaux porteurs (12) ou qui peuvent être reliées par adhérence de formes avec le tapis transporteur (11) et/ou les bandeaux porteurs (12).

8. Dispositif (10) selon la revendication 7, **caractérisé en ce qu'**il existe pour chaque bandeau support (12) un réceptacle (27), sachant que le réceptacle (27) respectif forme une jonction par adhérence de formes avec le bandeau porteur (12) et est relié avec la garniture (26).

9. Dispositif (10) selon la revendication 2, **caractérisé en ce que** le soutènement médian (20) se compose d'une ou plusieurs chaînes médianes (21) et que la chaîne médiane (21) présente des taquets entraîneurs (28) qui engrènent dans les bandeaux porteurs (12) et les redressent lorsqu'ils entrent en liaison active avec le bandeau porteur (12') déformé par la contrainte thermique, pour restaurer la forme originelle du bandeau porteur (12).
